# EUROPÄISCHE PATENTANMELDUNG

(11) **EP 3 907 547 A1**
(43) Veröffentlichungstag der Anmeldung: **10.11.2021**
(21) Anmeldenummer: 21168066.5
(22) Anmeldetag: 13.04.2021
(51) Int. Cl.: G02B 13/00, G01C 3/00, G02B 13/16, G02B 13/18, G02B 5/20

(54) **OPTOELEKTRONISCHER SENSOR**

(30) Priorität: 05.05.2020 DE 102020112091
(71) Anmelder: SICK AG, 79183 Waldkirch (DE)
(72) Erfinder: Nübling, Ralf Ulrich, 79211 Denzlingen (DE)

(57) **Zusammenfassung**

Optoelektronischer Sensor (1) mit einem Empfangselement (2) und mindestens einer Empfangslinse (3) und einem optischen Filterelement (4), wobei das Filterelement (2) spaltfrei zwischen einer ersten Teillinse (5) und einer zweiten Teillinse (6) angeordnet ist, wobei die Teillinsen (5, 6) eine der Empfangslinsen (3) oder die Empfangslinse (3) bilden, wobei das optische Filterelement (4) mindestens eine konvexe oder konkave Form aufweist und empfangene Lichtstrahlen das Filterelement (2) an jeder Eintrittsstelle in gleichem Winkel durchlaufen oder ein optoelektronischer Sensor (1) mit einem Empfangselement (2) und einer Empfangslinse (3) und einem optischen Filterelement (4), welches zwischen dem Empfangselement (2) und der Empfangslinse (3) angeordnet ist, wobei das optische Filterelement (4) mindestens eine gekrümmte Freiformoberfläche aufweist, so dass die empfangenen Lichtstrahlen das Filterelement (4) an der Oberfläche (9) des optischen Filterelements (4) an jeder Eintrittsstelle in gleichem Winkel durchlaufen.

## Beschreibung

Die vorliegende Erfindung betrifft einen optoelektronischen Sensor mit einem Empfangselement und einer Empfangslinse gemäß dem Oberbegriff von Anspruch 1 und gemäß dem Oberbegriff von Anspruch 14 sowie einen optoelektronischen Sensor mit einem Sendeelement und einer Sendelinse gemäß dem Oberbegriff von Anspruch 2 und gemäß dem Oberbegriff von Anspruch 15.

Um bei optoelektronischen Sensoren möglichst eine hohe Detektivität und Störfestigkeit zu erreichen, ist es von Vorteil, einen Fremdlichtfilter, insbesondere einen Bandpassfilter vor dem Empfänger zu platzieren, der möglichst nur die Wellenlänge der Sendestrahlung passieren lässt.

Praktisch stößt dies an Grenzen, so dass die Filter eine größere Durchlässigkeit haben als gewünscht. Dies liegt einerseits an Toleranzeffekten, wie beispielsweise einer unterschiedlichen Sendewellenlänge bei gleicher Serie aufgrund von Toleranzen, Temperaturschwankungen oder Fertigungsunterschieden. Maßgeblicher Grund ist jedoch auch, dass die Empfangsstrahlung durch eine empfangsseitige Abbildung bedingt nicht ideal ist, d. h. alle Strahlung nicht unter gleichem Winkel (Inzidenzwinkel) auf den Filter trifft.

Aufgrund des breiten Winkelbereichs der auftreffenden Strahlung muss der Filter zwangsläufig breitbandig ausgelegt werden, was zu hohen Fremdlichtanteilen führt. Alternativ werden Filter auf Frontscheiben aufgebracht, da die optische Strahlung empfangsseitig vor der Abbildungsoptik in der Regel unter relativ gleichen Winkeln auf den Filter auftritt. Dadurch kann das Filter schmalbandiger ausgelegt werden, als nach einer optischen Abbildung. Der Nachteil davon ist, dass ein Filter vor der Empfangsoptik sehr großflächig ist und dadurch hohe Kosten verursacht.

Eine Aufgabe der Erfindung besteht darin, eine Filterwirkung zu verbessern, ohne die Kosten des Filters unnötig zu erhöhen und den Filter nicht unnötig zu vergrößern.

Die Aufgabe wird gemäß Anspruch 1 gelöst durch einen optoelektronischen Sensor mit einem Empfangselement und mindestens einer Empfangslinse und einem optischen Filterelement, wobei das Filterelement spaltfrei zwischen einer ersten Teillinse und einer zweiten Teillinse angeordnet ist, wobei die Teillinsen eine der Empfangslinsen oder die Empfangslinse bilden, wobei das optische Filterelement mindestens eine konvexe oder konkave Form aufweist und empfangene Lichtstrahlen das Filterelement an jeder Eintrittsstelle in gleichem Winkel durchlaufen.

Die Aufgabe wird gemäß Anspruch 2 gelöst durch einen optoelektronischen Sensor mit einem Sendeelement und mindestens einer Sendelinse und einem optischen Filterelement, wobei das Filterelement spaltfrei zwischen einer ersten Teillinse und einer zweiten Teillinse angeordnet ist, wobei die Teillinsen eine der Sendelinsen oder die Sendelinse bilden, wobei das optische Filterelement mindestens eine konvexe oder konkave Form aufweist und gesendete Lichtstrahlen das Filterelement an jeder Eintrittsstelle in gleichem Winkel durchlaufen.

Die Erfindung sieht vor, eine Fläche des Filters so auszugestalten, dass diese der Wellenfront der Empfangsstrahlung bzw. Sendestrahlung entspricht. D. h. der Inzidenzwinkel aller Empfangsstrahlung bzw. Sendestrahlung zur Filterschichtfläche nahezu gleich ist.

Gemäß der Erfindung ist die Empfangslinse bzw. Sendelinse in zwei Linsen aufgeteilt, nämlich die erste Teillinse und die zweite Teillinse, und zwar exakt so, dass die Trennschicht der Wellenfront entspricht, d. h. alle Strahlen in der Trennebene möglichst einen gleichen Inzidenzwinkel haben.

Beispielsweise sind die Teillinsen und das Filterelement miteinander verpresst. Jedoch kann es auch vorgesehen sein, dass eine Oberfläche einer Teillinse beschichtet ist und diese Beschichtung das Filterelement bildet. Die zweite Teillinse wird dann mit dem Filterelement der ersten Teillinse verbunden, so dass wiederum eine spaltfreie Verbindung vorliegt.

Durch die spaltfreie Verbindung zwischen den Teillinsen und dem Filter entfallen zusätzliche Grenzflächen mit Luft oder anderen Medien, die sich negativ auf die optischen Eigenschaften auswirken könnten, wie beispielsweise zusätzliche Brechungen und Richtungsänderungen der optischen Strahlung.

Durch die Verbindung von erster Teillinse, zweiter Teillinse und optischem Filterelement zu einem einzigen einstückigen Bauteil wird auch eine Montage des optoelektronischen Sensors vereinfacht, da nur noch ein einziges Bauteil montiert und justiert werden muss.

Die Teillinsen und das Filterelement können beispielsweise spaltfrei mit einem transparenten Gel, einem transparenten Kit oder ähnlichem verbunden werden.

Bei dem Filterelement kann es sich um ein Bandpassfilter, um ein Hochpassfilter, ein Tiefpassfilter, um ein Teilerschichtfilter, ein Polarisationsfilter oder ähnliches handeln.

Damit ist eine optimale Auslegung des Filterelements bezüglich Fremdlicht und/oder Störlicht möglich. Gemäß der Erfindung kann beispielsweise eine Schmalbandigkeit um eine Varianz eines bisher berücksichtigten Inzidenzwinkels der einfallenden Strahlung reduziert werden, wodurch sich bessere Signal-Rauschabstände und eine höhere Detektivität ergeben.

Weiter kann es sich bei dem Filterelement auch um ein Spiegelelement oder ein Blendenelement handeln.

Weiterhin werden die Baugröße und die Kosten, insbesondere die Montagekosten reduziert.

Das Empfangselement ist beispielsweise eine Empfangsdiode. Vor dem Empfangselement befindet sich in einem Abstand die Empfangslinse. Die Empfangslinse ist beispielsweise als Sammellinse ausgeführt und bündelt das Licht auf das Empfangselement. Das Empfangslicht tritt dabei nach der Empfangslinse gebündelt auf das Empfangselement.

Das Sendeelement ist beispielsweise eine Sendediode. Vor dem Sendeelement befindet sich in einem Abstand die Sendelinse. Die Sendelinse ist beispielsweise als Sammellinse ausgeführt und bündelt das Licht. Das Sendelicht tritt dabei nach der Sendelinse gebündelt aus.

Weiter wird die Aufgabe gemäß Anspruch 14 gelöst durch einen optoelektronischen Sensor mit mindestens einem Empfangselement und einer Empfangslinse und einem optischen Filterelement, welches zwischen dem Empfangselement und der Empfangslinse angeordnet ist, wobei das optische Filterelement mindestens eine gekrümmte Freiformoberfläche aufweist, so dass die empfangenen Lichtstrahlen das Filterelement an der Oberfläche des optischen Filterelements an jeder Eintrittsstelle im senkrechten Winkel durchlaufen.

Die Erfindung sieht vor, eine Freiformoberfläche des Filters so auszugestalten, dass diese der Wellenfront der Empfangsstrahlung entspricht. D. h. der Inzidenzwinkel aller Empfangsstrahlung zur Filterschichtoberfläche nahezu gleich ist.

Weiter wird die Aufgabe gemäß Anspruch 15 gelöst durch einen optoelektronischen Sensor mit einem Sendeelement und einer Sendelinse und einem optischen Filterelement, welches zwischen dem Sendeelement und der Sendelinse angeordnet ist, wobei das optische Filterelement mindestens eine gekrümmte Freiformoberfläche aufweist, so dass die gesendeten Lichtstrahlen das Filterelement an der Oberfläche des optischen Filterelements an jeder Eintrittsstelle in gleichem Winkel durchlaufen.

Die Erfindung sieht vor, eine Freiformoberfläche des Filters so auszugestalten, dass diese der Wellenfront der Sendestrahlung entspricht. D. h. der Inzidenzwinkel aller Sendestrahlung zur Filterschichtoberfläche nahezu gleich ist.

In Weiterbildung der Erfindung durchlaufen empfangene Lichtstrahlen das Filterelement an jeder Eintrittsstelle im senkrechten Winkel. Dadurch wird der Wirkungsgrad des Filters optimiert.

In Weiterbildung der Erfindung weisen die erste Teillinse und die zweite Teillinse jeweils unterschiedliche Brechungsindizes auf.

Damit können optische Eigenschaften bzw. optische Fehler der Linsen gegenseitig kompensiert bzw. minimiert werden.

Dies kann beispielsweise den Vorteil haben, dass für eine vorgegebene Wellenlänge die Brennweite der Linsenkombination bzw. die daraus resultierende Lichtfleckgröße temperaturinvariant ist, d. h. sich bei einer Änderung der Temperatur nicht verändert. Da beispielsweise die konvexe erste Teillinse das Licht für niedrigere Temperaturen stärker fokussiert und die nachfolgende konkave zweite Teillinse das Licht entsprechend zerstreut, bleibt die Brennweite bei zwei verschiedenen Temperaturen gleich. Daraus folgt, dass die Größe des Lichtflecks auf einem Empfänger unverändert bleibt bzw. das Licht unverändert ausgesendet wird.

In Weiterbildung der Erfindung ist der optoelektronische Sensor ein Sensor nach dem Lichtlaufzeitverfahren. Dabei wird vom Lichtsender ein kurzer Lichtimpuls bzw. eine Gruppe von Lichtimpulsen ausgesendet. Der oder die Lichtimpulse werden von einem Objekt reflektiert bzw. remittiert und vom Empfangselement des Lichtempfängers empfangen. Von einer nachgeordneten Auswerteeinheit wird die Laufzeit des Lichtes vom Aussenden bis zum Empfangen ausgewertet und daraus die Entfernung des Objektes berechnet.

In Weiterbildung der Erfindung ist der optoelektronische Sensor ein Laserscanner, ein Sicherheitslaserscanner, eine 3D-Kamera, eine Stereokamera oder eine Lichtlaufzeitkamera.

Zur Positionserfassung überwacht der ortsauflösende Sensor, der Laserscanner, der Sicherheitslaserscanner, die 3D-Kamera, die Stereokamera oder die Lichtlaufzeitkamera einen zweidimensionalen oder dreidimensionalen Überwachungsbereich bzw. eine Messdatenkontur. Dabei kann es sich auch synonym um ein Überwachungsfeld handeln.

Eine 3D-Kamera überwacht beispielsweise ebenfalls einen Überwachungsbereich mittels einer Vielzahl von erfassten Distanzwerten. Eine 3D-Kamera hat den Vorteil, dass ein volumenartiger Schutzbereich überwacht werden kann.

Eine Stereokamera überwacht beispielsweise ebenfalls einen Überwachungsbereich mittels einer Vielzahl von erfassten Distanzwerten. Die Distanzwerte werden auf Basis der zwei Kameras der Stereokamera ermittelt, die in einem Basisabstand zueinander montiert sind. Eine Stereokamera hat ebenso den Vorteil, dass ein volumenartiger Schutzbereich überwacht werden kann.

Mittels einer Lichtlaufzeitkamera werden Distanzwerte aufgrund der gemessenen Lichtlaufzeit ermittelt, welche von einem Bildsensor ermittelt werden. Eine Lichtlaufzeitkamera hat ebenso den Vorteil, dass ein volumenartiger bzw. räumlicher Schutzbereich überwacht werden kann.

In Weiterbildung weisen eine erste Oberfläche der ersten Teillinse und eine zweite Oberfläche der zweiten Teillinse jeweils eine plane, konvexe oder konkave Oberfläche auf.

Damit können unterschiedliche Linsenformen, insbesondere eine Sammellinse durch die jeweilige Gestaltung der Teillinsen gebildet werden. Durch die Wahl der Oberflächen der ersten und zweiten Teillinse wird die optische Strahlformungseigenschaft der Empfangslinse bestimmt. Durch die Trennfläche zwischen erster und zweiter Teillinse wird die Flächenform des Filterelements gebildet.

In Weiterbildung der Erfindung weist die erste Teillinse und/oder die zweite Teillinse eine sphärische Oberfläche auf.

Eine sphärische Oberfläche ist ein Teil einer Kugelfläche. Das Filterelement ist dabei ein rotationssymmetrischer Körper, der gemäß dieser Ausführung einer rotationssymmetrischen Empfangslinse zugeordnet ist. Gemäß dieser Ausführungsform kann die Lichtenergie auf einen möglichst kleinen Lichtfleck gebündelt werden. Dies verbessert die Sensorempfindlichkeit und lässt bei Triangulationstaster eine höhere Abstandsgenauigkeit zu. Das Empfangselement ist beispielsweise eine Empfangsdiode mit einer kleinen Empfangsfläche. So ist die Empfangsfläche beispielsweise kleiner als 1 mm².

In Weiterbildung ist das Filterelement aus Glas oder Kunststoff. Kunststoff ist preiswert verarbeitbar und insbesondere sind Kunststoffspritzlinge einfach herstellbar. Glas eignet sich insbesondere für die Herstellung von hochpräzisen Filterelementen.

Auch die erste und/oder zweite Teillinse kann aus Glas und/oder Kunststoff gefertigt sein. Auch hierfür ist Kunststoff preiswert verarbeitbar und insbesondere sind Linsenkunststoffspritzlinge einfach herstellbar. Glas eignet sich insbesondere für die Herstellung von hochpräzisen Empfangslinsen.

In Weiterbildung der Erfindung ist das Filterelement selbst eine optische Linse. Dadurch kann das Filter selbst eine refraktive optische Eigenschaft aufweisen und eine Strahlformung bewirken.

In Weiterbildung der Erfindung ist die Empfangslinse eine Zylinderlinse und das Filterelement ein zylinderförmiger Körper.

Das Empfangselement ist dabei durch mehrere in Reihe angeordnete Empfangselemente gebildet. Es kann jedoch auch ein zeilenförmiges oder ein streifenförmiges Empfangselement angeordnet sein. Eine solche Anordnung ist beispielsweise bei einem Barcodescanner oder einem Lichtgitter von Vorteil.

In Weiterbildung der Erfindung ist die Sendelinse eine Zylinderlinse und das Filterelement ein zylinderförmiger Körper.

Das Sendeelement ist dabei durch mehrere in Reihe angeordnete Sendeelemente gebildet. Es kann jedoch auch ein zeilenförmiges oder ein streifenförmiges Sendeelement angeordnet sein. Eine solche Anordnung ist beispielsweise bei einem Barcodescanner oder einem Lichtgitter von Vorteil.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen optoelektronischen Sensor nach dem Stand der Technik;
- Figur 2 bis 7: jeweils Ausführungsbeispiele des erfindungsgemäßen Sensors;
- Figur 8: eine Zylinderlinse und ein Filterelement als zylindrischen Körper;
- Figur 9: einen optoelekronischen Sensor mit einem Filterelement mit mindestens einer gekrümmte Freiformoberfläche;
- Figur 10: einen optoelektronischen Sensor mit einem Sendeelement und einer Sendelinse.

In den nachfolgenden Figuren sind identische Teile mit identischen Bezugszeichen versehen.

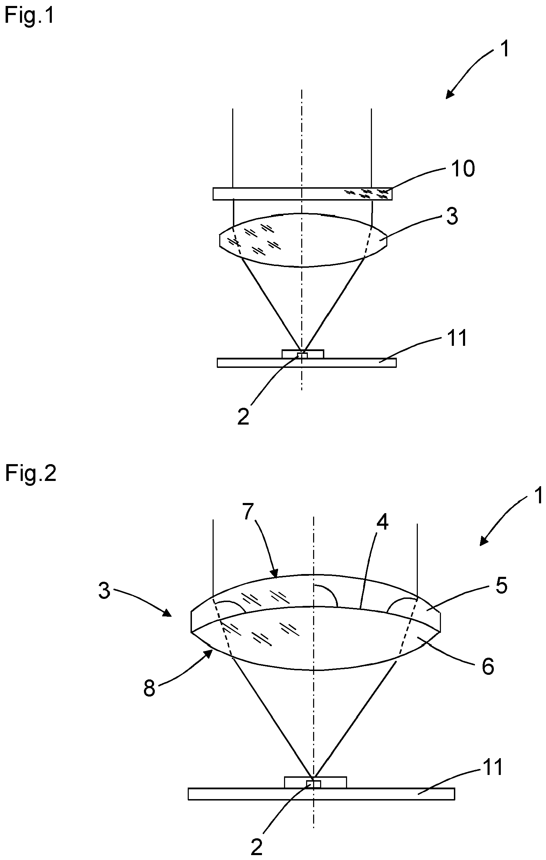

Figur 1 zeigt einen Teil eines optoelektronischen Sensors 1 nach dem Stand der Technik. Gemäß Figur 1 ist auf einer Leiterkarte 11 bzw. einer Platine ein Empfangselement 2 angeordnet. Beabstandet zu dem Empfangselement 2 ist eine Empfangslinse 3 angeordnet. Das Empfangselement 2 ist dabei innerhalb der Brennweite im Brennpunkt der Empfangslinse 4 angeordnet. Vor der Empfangslinse 4 ist ein optisches Filter 10 angeordnet. Einfallendes Licht durchdringt daher zunächst das Filter 10, wobei unerwünschte Lichtanteile herausgefiltert werden. Anschließend wird das einfallende Licht von der Empfangslinse 3 auf das Empfangselement 2 fokussiert.

Figur 2 zeigt einen optoelektronischen Sensor 1 gemäß der vorliegenden Erfindung mit einem Empfangselement 2 und mindestens einer Empfangslinse 3 und einem optischen Filterelement 4, wobei das Filterelement 4 spaltfrei zwischen einer ersten Teillinse 5 und einer zweiten Teillinse 6 angeordnet ist, wobei die Teillinsen 5, 6 eine der Empfangslinsen 3 oder die Empfangslinse 3 bilden, wobei das optische Filterelement 4 mindestens eine konvexe oder konkave Form aufweist, und empfangene Lichtstrahlen das Filterelement 4 an jeder Eintrittsstelle in gleichem Winkel durchlaufen.

Gemäß Figur 2 und den nachfolgenden Figuren kann anstatt des Empfangselements 2 auch ein Sendeelement 13 vorgesehen sein, wobei anstatt der Empfangslinse 3 eine Sendelinse 14 vorgesehen ist.

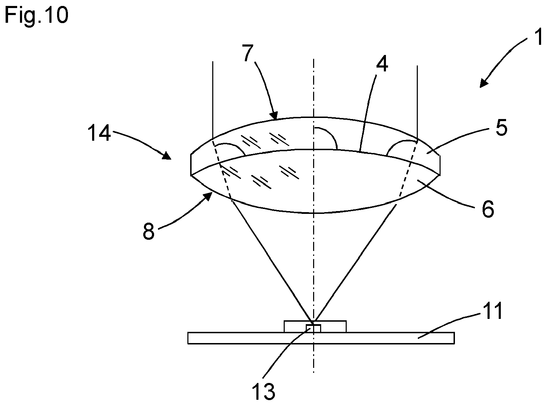

Beispielsweise zeigt Figur 10 einen optoelektronischen Sensor 1 mit einem Sendeelement 13 und mindestens einer Sendelinse 14, und einem optischen Filterelement 4, wobei das Filterelement 4 spaltfrei zwischen einer ersten Teillinse 5 und einer zweiten Teillinse 6 angeordnet ist, wobei die Teillinsen 5, 6 eine der Sendelinsen 14 oder die Sendelinse 14 bilden, wobei das optische Filterelement 4 mindestens eine konvexe oder konkave Form aufweist und gesendete Lichtstrahlen das Filterelement 4 an jeder Eintrittsstelle in gleichem Winkel durchlaufen.

Gemäß Figur 2 ist eine Fläche des optischen Filterelements 4 so ausgebildet, dass diese Fläche der Wellenfront der Empfangsstrahlung entspricht. D. h. der Inzidenzwinkel aller Empfangsstrahlung zur Filterschichtfläche nahezu gleich ist.

Gemäß Figur 2 ist die Empfangslinse 3 in zwei Linsen aufgeteilt, nämlich die erste Teillinse 5 und die zweite Teillinse 6, und zwar exakt so, dass die Trennschicht der Wellenfront entspricht, d. h. alle Strahlen in der Trennebene möglichst einen gleichen Inzidenzwinkel haben.

Beispielsweise sind die Teillinsen 5 und 6 und das Filterelement 4 miteinander verpresst. Jedoch kann es auch vorgesehen sein, dass eine Oberfläche einer Teillinse 5 oder 6 beschichtet ist und diese Beschichtung das Filterelement 4 bildet. Die zweite Teillinse 6 wird dann mit dem Filterelement 4 der ersten Teillinse 5 verbunden, so dass wiederum eine spaltfreie Verbindung vorliegt.

Durch die spaltfreie Verbindung zwischen den Teillinsen 5 und 6 und dem Filter 4 entfallen zusätzliche Grenzflächen mit Luft oder anderen Medien, die sich negativ auf die optischen Eigenschaften auswirken könnten, wie beispielsweise zusätzliche Brechungen und Richtungsänderungen der optischen Strahlung.

Die Teillinsen 5 und 6 und das Filterelement 4 können beispielsweise spaltfrei mit einem transparenten Gel, einem transparenten Kit oder ähnlichem verbunden werden. Bei dem Filterelement 4 kann es sich um ein Bandpassfilter, um ein Hochpassfilter, ein Tiefpassfilter, um ein Teilerschichtfilter, ein Polarisationsfilter oder Ähnliches handeln. Weiter kann es sich bei dem Filterelement 4 auch um ein Spiegelelement oder ein Blendenelement handeln.

Das Empfangselement 2 ist beispielsweise eine Empfangsdiode. Vor dem Empfangselement 2 befindet sich in einem Abstand die Empfangslinse 4. Die Empfangslinse 3 ist beispielsweise als Sammellinse ausgeführt und bündelt das Licht auf das Empfangselement 2. Das Empfangslicht tritt dabei nach der Empfangslinse 3 gebündelt auf das Empfangselement 2.

Gemäß einem Ausführungsbeispiel ist der optoelektronische Sensor 1 ein Sensor nach dem Lichtlaufzeitverfahren. Dabei wird vom Lichtsender ein kurzer Lichtimpuls bzw. eine Gruppe von Lichtimpulsen ausgesendet. Der oder die Lichtimpulse werden von einem Objekt reflektiert bzw. remittiert und vom Empfangselement 2 des Lichtempfängers empfangen. Von einer nachgeordneten Auswerteeinheit wird die Laufzeit des Lichtes vom Aussenden bis zum Empfangen ausgewertet und daraus die Entfernung des Objektes berechnet.

Gemäß einem Ausführungsbeispiel ist der optoelektronische Sensor 1 ein Laserscanner, ein Sicherheitslaserscanner, eine 3D-Kamera, eine Stereokamera oder eine Lichtlaufzeitkamera.

Gemäß den Figuren 2 bis 7 weisen eine erste Oberfläche 7 der ersten Teillinse 5 und eine zweite Oberfläche 8 der zweiten Teillinse 6 jeweils eine plane, konvexe oder konkave Oberfläche auf.

Damit können unterschiedliche Linsenformen, insbesondere eine Sammellinse durch die jeweilige Gestaltung der Teillinsen 5 und 6 gebildet werden. Durch die Wahl der Oberflächen der ersten Teillinse 5 und der zweiten Teillinse 6 wird die optische Strahlformungseigenschaft der Empfangslinse 3 bestimmt. Durch die Trennfläche zwischen erster Teillinse 5 und zweiter Teillinse 6 wird die Flächenform des Filterelements 4 gebildet.

Gemäß Figur 2 weist die erste Teillinse 5 und die zweite Teillinse 6 eine sphärische Oberfläche auf. Die erste Oberfläche 7 ist konvex ausgebildet und die zweite Oberfläche 8 ist ebenfalls konvex ausgebildet.

Eine sphärische Oberfläche ist ein Teil einer Kugelfläche. Das Filterelement 4 ist dabei ein rotationssymmetrischer Körper, der gemäß dieser Ausführung einer rotationssymmetrischen Empfangslinse 3 zugeordnet ist. Gemäß dieser Ausführungsform kann die Lichtenergie auf einen möglichst kleinen Lichtfleck gebündelt werden. Dies verbessert die Sensorempfindlichkeit und lässt bei einem Triangulationstaster eine höhere Abstandsgenauigkeit zu. Das Empfangselement 2 ist beispielsweise eine Empfangsdiode mit einer kleinen Empfangsfläche. So ist die Empfangsfläche beispielsweise kleiner als 1 mm².

Gemäß den Figuren ist das Filterelement 2 beispielsweise aus Glas oder Kunststoff. Auch die erste und/oder zweite Teillinse 5, 6 kann aus Glas und/oder Kunststoff gefertigt sein.

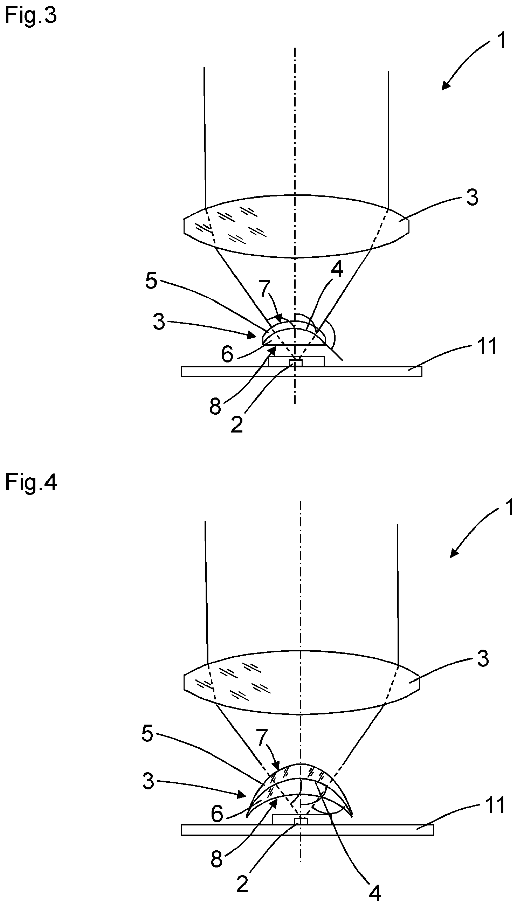

Figur 3 zeigt ein Ausführungsbeispiel mit mehreren Empfangslinsen 3. Eine Empfangslinse 3 ist eine herkömmliche Empfangslinse und die andere Empfangslinse 3 weist ein integriertes optisches Filterelement 4 auf. Die Figuren 4 bis 8 zeigen jeweils ein Ausführungsbeispiel mit mehreren, insbesondere zwei Empfangslinsen 3. Gemäß Figur 3 ist die erste Oberfläche 7 konvex ausgeführt und die zweite Oberfläche 8 plan oder eben ausgeführt.

Gemäß Figur 4 ist die erste Oberfläche 7 konvex ausgeführt und die zweite Oberfläche 8 konkav ausgeführt.

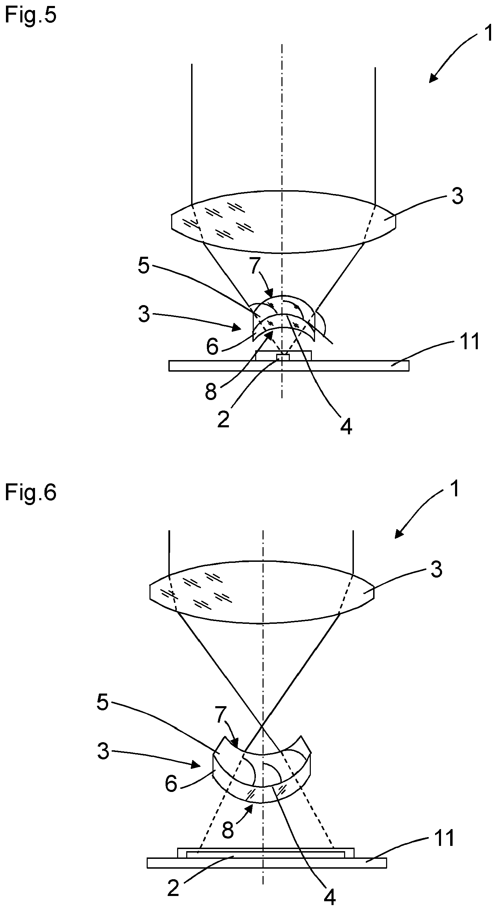

Gemäß Figur 5 ist die erste Oberfläche 7 konvex ausgeführt und die zweite Oberfläche 8 konkav ausgeführt, wobei die Ränder der Teillinsen 5, 6 beschnitten sind.

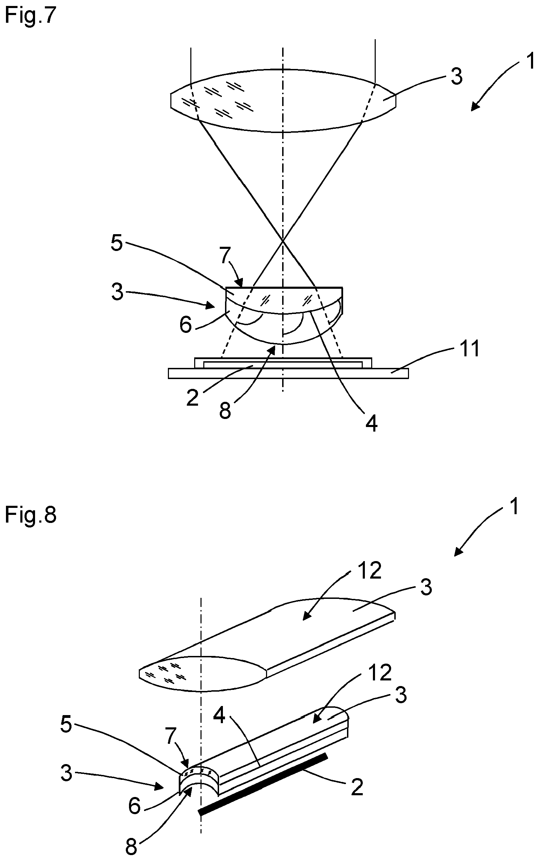

Gemäß Figur 6 ist die erste Oberfläche 7 konkav ausgeführt und die zweite Oberfläche 8 konvex ausgeführt. Das optische Filterelement 4 ist in Emfangsstrahlrichtung nach einem Brennpunkt der Empfangslinse 3 angeordnet. Das Empfangselement 2 ist durch einen Bildsensor gebildet.
Gemäß Figur 7 ist die erste Oberfläche 7 plan oder eben ausgeführt und die zweite Oberfläche 8 konvex ausgeführt, wobei die Ränder der Teillinsen 5, 6 beschnitten sind.

Gemäß Figur 8 ist die Empfangslinse eine Zylinderlinse 12 und das Filterelement 4 ein zylinderförmiger Körper.

Das Empfangselement 2 ist dabei durch mehrere in Reihe angeordnete Empfangselemente 2 gebildet. Es kann jedoch auch ein zeilenförmiges oder ein streifenförmiges Empfangselement 2 angeordnet sein. Eine solche Anordnung ist beispielsweise bei einem Barcodescanner oder einem Lichtgitter sinnvoll.

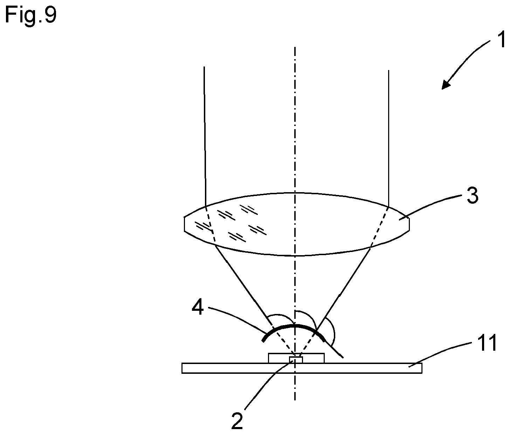

Figur 9 zeigt einen optoelektronischen Sensor 1 mit mindestens einem Empfangselement 2 und einer Empfangslinse 3 und einem optischen Filterelement 4, welches zwischen dem Empfangselement 2 und der Empfangslinse 3 angeordnet ist, wobei das optische Filterelement 4 mindestens eine gekrümmte Freiformoberfläche aufweist, so dass die empfangenen Lichtstrahlen das Filterelement 4 an der Oberfläche des optischen Filterelements 4 an jeder Eintrittsstelle im senkrechten Winkel durchlaufen.

Figur 9 sieht vor, eine Freiformoberfläche des Filters 4 so auszugestalten, dass diese der Wellenfront der Empfangsstrahlung entspricht. D. h. der Inzidenzwinkel aller Empfangsstrahlung zur Filterschichtoberfläche nahezu gleich ist.

### Bezugszeichen:

1 optoelektronischer Sensor
2 Empfangselement
3 Emfangslinse
4 optisches Filterelement
5 erste Teillinse
6 zweite Teillinse
7 erste Oberfläche
8 zweite Oberfläche
9 Oberfläche
10 optisches Filter
11 Leiterkarte
12 Zylinderlinse
13 Sendeelement
14 Sendelinse

## Patentansprüche

1. Optoelektronischer Sensor (1) mit einem Empfangselement (2) und mindestens einer Empfangslinse (3), und einem optischen Filterelement (4), **dadurch gekennzeichnet, dass** das Filterelement (4) spaltfrei zwischen einer ersten Teillinse (5) und einer zweiten Teillinse (6) angeordnet ist, wobei die Teillinsen (5, 6) eine der Empfangslinsen (3) oder die Empfangslinse (3) bilden, wobei das optische Filterelement (4) mindestens eine konvexe oder konkave Form aufweist und empfangene Lichtstrahlen das Filterelement (4) an jeder Eintrittsstelle in gleichem Winkel durchlaufen.

2. Optoelektronischer Sensor (1) mit einem Sendeelement (13) und mindestens einer Sendelinse (14), und einem optischen Filterelement (4), **dadurch gekennzeichnet, dass** das Filterelement (4) spaltfrei zwischen einer ersten Teillinse (5) und einer zweiten Teillinse (6) angeordnet ist, wobei die Teillinsen (5, 6) eine der Sendelinsen (14) oder die Sendelinse (14) bilden, wobei das optische Filterelement (4) mindestens eine konvexe oder konkave Form aufweist und gesendete Lichtstrahlen das Filterelement (4) an jeder Eintrittsstelle in gleichem Winkel durchlaufen.

3. Optoelektronischer Sensor (1) nach Anspruch 1, **dadurch gekennzeichnet, dass** empfangene Lichtstrahlen das Filterelement (4) an jeder Eintrittsstelle im senkrechten Winkel durchlaufen.

4. Optoelektronischer Sensor (1) nach Anspruch 2, **dadurch gekennzeichnet, dass** gesendete Lichtstrahlen das Filterelement (4) an jeder Eintrittsstelle im senkrechten Winkel durchlaufen

5. Optoelektronischer Sensor (1) nach mindestens einem der vorhergehenden Ansprüche, **dadurch gekennzeichnet, dass** die erste Teillinse und die zweite Teillinse jeweils unterschiedliche Brechungsindizes aufweisen.

6. Optoelektronischer Sensor (1) nach mindestens einem der vorhergehenden Ansprüche, **dadurch gekennzeichnet, dass** der optoelektronische Sensor (1) ein Sensor (1) nach dem Lichtlaufzeitverfahren ist.

7. Optoelektronischer Sensor (1) nach mindestens einem der vorhergehenden Ansprüche, **dadurch gekennzeichnet, dass** der Sensor (1) ein Laserscanner oder eine Kamera ist.

8. Optoelektronischer Sensor (1) nach Anspruch 1 oder 2, **dadurch gekennzeichnet, dass** eine erste Oberfläche (7) der ersten Teillinse (5) und eine zweite Oberfläche (8) der zweiten Teillinse (6) jeweils eine plane, konvexe oder konkave Oberfläche aufweisen.

9. Optoelektronischer Sensor (1) nach mindestens einem der vorhergehenden Ansprüche, **dadurch gekennzeichnet, dass** die erste Teillinse (5) und/oder die zweite Teillinse (6) eine sphärische Oberfläche aufweist.

10. Optoelektronischer Sensor (1) nach mindestens einem der vorhergehenden Ansprüche, **dadurch gekennzeichnet, dass** das Filterelement (4) aus Glas oder Kunststoff ist.

11. Optoelektronischer Sensor (1) nach mindestens einem der vorhergehenden Ansprüche, **dadurch gekennzeichnet, dass** das Filterelement (4) eine optische Linse ist.

12. Optoelektronischer Sensor (1) nach mindestens einem der vorhergehenden Ansprüche 1 oder 3 bis 8, **dadurch gekennzeichnet, dass** die Empfangslinse (3) eine Zylinderlinse ist und das Filterelement (4) ein zylinderförmiger Körper ist.

13. Optoelektronischer Sensor (1) nach mindestens einem der vorhergehenden Ansprüche 2 oder 3 bis 8, **dadurch gekennzeichnet, dass** die Sendelinse (14) eine Zylinderlinse ist und das Filterelement (4) ein zylinderförmiger Körper ist.

14. Optoelektronischer Sensor (1) mit einem Empfangselement (2) und einer Empfangslinse (3), und einem optischen Filterelement (4), welches zwischen dem Empfangselement (2) und der Empfangslinse (3) angeordnet ist,
**dadurch gekennzeichnet, dass**
das optische Filterelement (4) mindestens eine gekrümmte Freiformoberfläche aufweist, so dass die empfangenen Lichtstrahlen das Filterelement (4) an der Oberfläche (9) des optischen Filterelements (4) an jeder Eintrittsstelle in gleichem Winkel durchlaufen.

15. Optoelektronischer Sensor (1) mit einem Sendeelement (13) und einer Sendelinse (14), und einem optischen Filterelement (4), welches zwischen dem Sendeelement (13) und der Sendelinse (14) angeordnet ist,
**dadurch gekennzeichnet, dass**
das optische Filterelement (4) mindestens eine gekrümmte Freiformoberfläche aufweist, so dass die gesendeten Lichtstrahlen das Filterelement (4) an der Oberfläche (9) des optischen Filterelements (4) an jeder Eintrittsstelle in gleichem Winkel durchlaufen.
